(19) Europäisches Patentamt
European Patent Office
Office européen des brevets

(11) **EP 2 869 042 B1**

(12) **EUROPÄISCHE PATENTSCHRIFT**

(45) Veröffentlichungstag und Bekanntmachung des Hinweises auf die Patenterteilung:
**10.08.2016  Patentblatt 2016/32**

(51) Int Cl.:
*G01F 23/00* *(2006.01)*   *G01F 23/28* *(2006.01)*

(21) Anmeldenummer: **13191426.9**

(22) Anmeldetag: **04.11.2013**

(54) **Modellbasierte Rauschunterdrückung bei Füllstandmessgeräten**

Model-based noise suppression for fill level measuring devices

Suppression du bruit basée sur un modèle pour des appareils de mesure du niveau de remplissage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.05.2015  Patentblatt 2015/19**

(73) Patentinhaber: **VEGA Grieshaber KG**
**77709 Wolfach (DE)**

(72) Erfinder: **Hoferer, Christian**
**77654 Offenburg (DE)**

(74) Vertreter: **Maiwald Patentanwalts GmbH**
**Engineering**
**Elisenhof**
**Elisenstrasse 3**
**80335 München (DE)**

(56) Entgegenhaltungen:
**EP-A2- 2 607 865      WO-A1-99/32857**
**US-A1- 2013 245 929**

**Beschreibung**

Gebiet der Erfindung

Die Erfindung betrifft die Füllstandmessung. Insbesondere betrifft die Erfindung ein Füllstandmessgerät, ein Verfahren zum Ermitteln eines Füllstands eines Füllguts, ein Programmelement und ein computerlesbares Medium.

Hintergrund

Zur Unterdrückung des Rauschens von Messwerten zeitlich aufeinanderfolgender Messungen werden oft Mittelungsverfahren eingesetzt. Dies bedeutet, dass mehrere, zeitlich aufeinanderfolgende Messwerte miteinander gemittelt werden. Die Anzahl der zu mittelnden Messwerte kann hierbei frei gewählt werden und muss je nach Anwendung vom Kunden oder vom Servicepersonal manuell parametriert werden. Bei trägen Messungen - d. h. die Füllgutfläche bewegt sich nur langsam - darf die Mittelung viele Messwerte umfassen, bei schnellen Messungen nur wenige, da ansonsten die Mittelung dazu führen könnte, dass ein Offset bzw. starker Versatz zwischen den ausgegebenen Füllständen und der Position der Füllgutoberfläche entsteht.
Insbesondere bei der Umschaltung zwischen Befüllung und Entleerung eines Tanks ist dieses Nachlaufen bzw. die Trägheit des Sensors zu beobachten, wenn ein klassisches Mittelungsverfahren nach dem aktuellen Stand der Technik verwendet wird. Der Sensor reagiert an seinem Ausgang aufgrund der Mittelung verzögert auf die Änderungen des Füllstands. Im schlimmsten Fall kann dieser Sachverhalt zu einer Überfüllung des Behälters oder zum Trockenlaufen einer Pumpe führen.
WO 99/32857 A1 beschreibt die Bestimmung der aktuellen Füllgutmasse in einem Luftfahrzeugtank unter Verwendung von Sensor- und Datenfusion. Es werden mehrere Sensoren verwendet, die Druck, Temperatur, Füllstand und Beschleunigung erfassen können. Die Messdaten werden geeignet fusioniert, um die aktuelle Füllgutmasse zu bestimmen.

Zusammenfassung der Erfindung

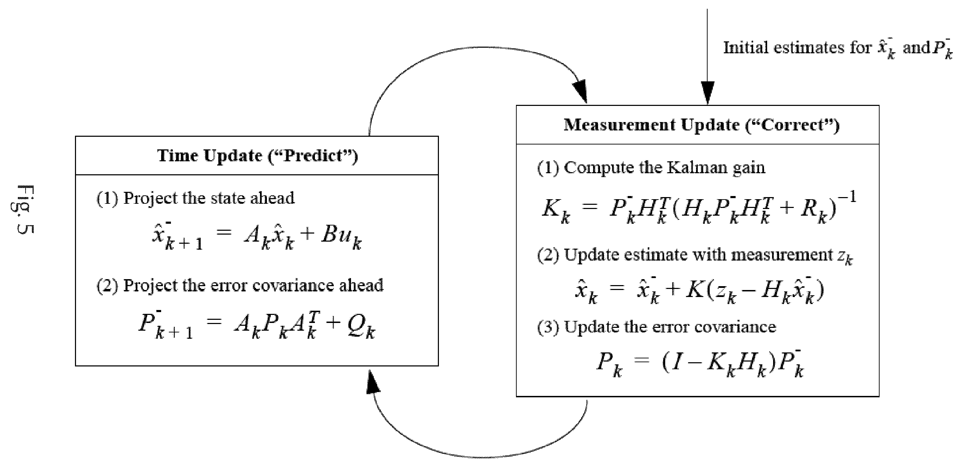

Es ist eine Aufgabe der Erfindung, die Genauigkeit von Füllstandmessungen zu erhöhen.
Diese Aufgabe wird durch die Merkmale der unabhängigen Patentansprüche gelöst. Weiterbildungen der Erfindung ergeben sich aus den Unteransprüchen und der folgenden Beschreibung.
Gemäß einem ersten Aspekt der Erfindung ist ein Füllstandmessgerät zur Ermittlung eines Füllstands eines Füllguts angegeben, welche eine Sensoreinrichtung und eine Steuereinheit aufweist. Die Sensoreinrichtung dient dem Erfassen eines Messwerts, der mit dem Füllstand des Füllguts zu einem ersten Zeitpunkt korrespondiert. Füllstandmessgeräte, die solche Sensoreinrichtungen aufweisen, sind bekannt. Hierbei handelt es sich beispielsweise um Füllstandradargeräte oder Ultraschallgeräte, welche ein Messsignal von einer Antenne zur Füllgutoberfläche abstrahlen und das an der Füllgutoberfläche (und ggf. an weiteren Reflektoren, wie Behälterboden, Trennschichten oder Behältereinbauten) reflektierte Empfangssignal auswerten. Aus diesem Empfangssignal kann dann der Füllstand des Füllguts zum Zeitpunkt der Messung bestimmt werden.
Zur Berechnung des Füllstands können auch mehrere Messwerte einer Messung herangezogen werden. Jedoch wird es in jedem Fall so sein, dass genau einer der Messwerte dem Füllstand entspricht, selbst wenn zur tatsächlichen Bestimmung des Füllstands aus der Messkurve mehrere Messwerte herangezogen werden.
Die Steuereinheit ist ausgeführt, für den erfassten Messwert die folgenden Schritte durchzuführen: Zunächst werden unterschiedliche und voneinander unabhängige mathematische Modelle unter Verwendung des erfassten Messwertes aktualisiert. Dieses "Aktualisieren" bedeutet dass der erfasste Messwert in die mathematischen Modelle eingefüttert wird und die Modelle dann aus diesem Messwert einen prognostizierten, zukünftigen Füllstand berechnen. Die Modelle arbeiten in Kombination mit Kalman Filtern, diese Aktualisierung ist in Fig. 5 skizziert.
Daraufhin berechnet die Steuereinheit die Güte jedes einzelnen Modells. Hierfür wird ein von der Sensoreinrichtung zu einem zweiten Zeitpunkt, der hinter dem ersten Zeitpunkt liegt, erfasster Messwert, der mit dem Füllstand des Füllguts zu dem zweiten Zeitpunkt korrespondiert, herangezogen.
Beispielsweise kann bei der Gütebestimmung berücksichtigt werden, wie gut jedes Modell den zum späteren Zeitpunkt durch Messung bestimmten Füllstand vorausgesagt hat.
Daraufhin kann die Steuereinheit eine Gewichtung und eine Mischung der Modelle oder ein Auswählen eines der Modelle in Abhängigkeit von ihrer jeweiligen Güte durchführen, woraufhin sie den Füllstand des Füllguts zu dem zweiten, späteren Zeitpunkt durch die gewichteten und gemischten Modelle oder durch das ausgewählte Modell berechnen kann. Daraufhin kann sie den berechneten Füllstand ausgeben.
In anderen Worten kann die Steuereinheit zunächst mögliche Füllstände des Füllguts zu dem zweiten Zeitpunkt mittels mehrerer unterschiedlicher und voneinander unabhängiger mathematischer Modelle unter Verwendung des zum ersten Zeitpunkt erfassten Messwertes berechnen. Daraufhin kann das Messgerät einen Füllstand des Füllguts zum zweiten Zeitpunkt erfassen. Dieser Füllstand zum zweiten Zeitpunkt kann dann zur Gewichtung und Mischung der Modelle oder zum Auswählen eines der Modelle herangezogen werden, indem er zur Berechnung der Güte jedes der einzelnen Modelle verwendet wird.

Die Güte jedes einzelnen Modells kann beispielsweise durch einen Vergleich des Füllstands zum zweiten Zeitpunkt mit dem vom Modell berechneten Füllstand zu diesem zweiten Zeitpunkt erfolgen.

Daraufhin erfolgt ein Ausgeben des Füllstands des Füllguts zum zweiten Zeitpunkt, wobei es sich bei diesem Füllstand nicht um einen gemessenen Füllstand, sondern um den von den gewichteten und gemischten Modellen oder von ausschließlich dem ausgewählten Modell berechneten Füllstand handelt.

Im Folgenden werden bestimmte, in der Anmeldung verwendete Begriffe definiert.

Situation (Befüllung/Entleerung/Ruhe):

Bei den an einer Messstelle auftretenden Situationen handelt es sich beispielsweise um gewisse Gegebenheiten, die bei einer Messung auftreten können, wie z.B. die Befüllung des Tanks/Behälters, die Entleerung des Tanks oder ein konstanter Füllstand, wobei sich die Füllgutoberfläche nicht bewegt. Bei der zu einem bestimmten Zeitpunkt vorliegenden "Situation" handelt es sich folglich um die sichtbaren Ereignisse, wie ein Mensch sie wahrnehmen würde.

Modell/Systemmodell:

Will man nur diese rein menschliche Sichtweise, wie die Situationen wahrgenommen werden, mathematisch beschreiben, um ggf. Rauschen herauszufiltern, Vorhersagen zu treffen oder die Situationen einfach mathematisch abzubilden, so benötigt man ein entsprechendes Modell. In dieses Modell fließen die physikalischen Eigenschaften einer Füllstandmessung mit ein.

Möchte man unterschiedliche Situationen beschreiben, so sind bestimmte mathematische Modelle mehr oder weniger gut geeignet. Daher bedient sich die Erfindung gleich mehrerer Modelle. Das einzelne Modell lässt sich z. B. über Differentialgleichungen ausdrücken. Eine Zeitdiskretisierung, wie sie in der Füllstandmessung oft vorliegt, führt dann zu einem zeitdiskreten Modell.

Zustand:

Der "Zustand" ist im engeren Sinne die gesuchte Größe, beispielsweise der Füllstand des Füllguts. Im Weiteren Kontext umfasst er den aktuellen Berechnungsfortschritt des Modells. Einfach ausgedrückt: Wie sieht denn das Modell zu einem Zeitpunkt k gerade in seiner Gesamtheit (also die Matrizen und Vektoren, die das Modell beschreiben) aus?

Ist das (zeitdiskrete) Modell bekannt, so kann mit einem Zustandsschätzer (beispielsweise ein Kalman-Filter) der Zustand des Systemmodells/Modells ermittelt werden. Unter Zustand kann die Gesamtheit aller Werte/Variablen des Modells und Schätzers zu einem festen Zeitpunkt k verstanden werden.

Ferner kann man den Vektor $\hat{x}_k$ als Zustandsvektor bezeichnen. Dieser Zustandsvektor kann die gesuchte Position $\hat{p}_k$ der Füllgutoberfläche enthalten. Darüber hinaus kann er auch die Schätzung der Geschwindigkeit $\hat{v}_k$ enthalten, mit der sich die Position der Füllgutoberfläche ändert. "Füllstand" lässt sich also nur in bestimmten Fällen mit "Zustand" gleichsetzen.

Das Füllstandmessgerät soll auf diese Weise die Genauigkeit der Füllgutoberfläche verbessern. Der eigentliche Messwert ist im Regelfall rauschbehaftet, d. h. selbst bei einer ruhenden Oberfläche kann nicht davon ausgegangen werden, dass zwei aufeinander folgende Messungen einen identischen Messwert liefern und somit denselben Füllstand liefern. Diese Ungenauigkeit beruht auf dem Rauschen, welches systembedingt bei der Messung vorhanden ist. Ursache hierfür können die verwendeten Bauteile, die Dimensionierung des Messgeräts selbst, thermisches Rauschen, externe Störungen oder systembedingtes Rauschen sein, wie es häufig bei technischen Geräten zu finden ist. Diese unerwünschten Störungen beeinflussen die Messgenauigkeit.

Gemäß der Erfindung ist die Steuereinheit ausgeführt, jedes der mathematischen Modelle mittels Kalman-Filter zu beschreiben.

Gemäß einer Ausführungsform der Erfindung ist die Steuereinheit ausgeführt zum Beschreiben von möglichen Zuständen des Füllguts zu einem dritten Zeitpunkt, der zeitlich hinter dem zweiten Zeitpunkt liegt, mittels der mehreren unterschiedlichen und voneinander unabhängigen mathematischen Modelle unter Verwendung des berechneten Füllstands zum zweiten Zeitpunkt.

Gemäß einer weiteren Ausführungsform der Erfindung berücksichtigen die Modelle die Geometrien des Behälters, in dem sich das Füllgut befindet.

Beispielhaft ist die Steuereinheit ausgeführt, die Güte jedes einzelnen Modells zu berechnen und die Gewichtung und Mischung der Modelle bzw. das Auswählen eines der Modelle unter Berücksichtigung einer Differenz zwischen dem von dem Füllstandmessgerät gemessenen Füllstand des Füllguts zu dem zweiten Zeitpunkt und den von den aktualisierten Modellen berechneten Füllständen durchzuführen.

Insbesondere kann vorgesehen sein, dass der von den gewichteten und gemischten Modellen oder dem ausgewählten Modell berechnete Füllstand des Füllguts zu dem zweiten Zeitpunkt verwendet wird, um die unabhängig mathematischen Modelle zu aktualisieren.

Damit kann erreicht werden, dass insbesondere diejenigen Modelle, die nicht zur aktuellen Situation passen und somit eine falsche Vorhersage des Füllstands liefern, der Position der Füllgutoberfläche weiterhin folgen können.

Gemäß einem weiteren Aspekt der Erfindung ist ein Verfahren zum Ermitteln eines Füllstands eines Füllguts angegeben, bei welchem zunächst ein Messwert erfasst wird, der mit dem Füllstand des Füllguts zu einem ersten Zeitpunkt korrespondiert. Daraufhin erfolgt eine Aktualisierung unterschiedlicher und voneinander unabhängiger mathematischer Modelle unter Verwendung des erfassten Messwertes. Daraufhin wird die Güte jedes einzelnen Modells berechnet und die Modelle werden gewichtet und gemischt oder es wird eines der Modelle ausgewählt, jeweils in Abhängigkeit von ihrer jeweiligen Güte. Daraufhin erfolgt das Berechnen eines Füllstands des Füllguts zu einem zweiten, späteren Zeitpunkt durch die gewichteten und gemischten Modelle oder durch das ausgewählte Modell sowie eine Ausgabe des durch die gewichteten und gemischten Modelle oder durch das ausgewählte Modell berechneten Füllstands.

Gemäß einem weiteren Aspekt der Erfindung ist ein Programmelement, das, wenn es auf einer Steuereinheit eines Füllstandmessgeräts ausgeführt wird, die Steuereinheit anleitet, die oben und im Folgenden beschriebenen Schritte durchzuführen, angegeben.

Dabei kann das Programmelement z. B. Teil einer Software sein, die auf dem Prozessor eines Füllstandmessgeräts gespeichert ist. Der Prozessor kann dabei ebenso Gegenstand der Erfindung sein. Weiterhin umfasst dieses Ausführungsbeispiel ein Programmelement, welches schon von Anfang die Erfindung verwendet, sowie auch ein Programmelement, welches durch eine Aktualisierung (Update) ein bestehendes Programm zur Verwendung der Erfindung veranlasst.

Gemäß einem weiteren Aspekt der Erfindung ist ein computerlesbares Medium angegeben, auf dem ein entsprechendes Programmelement gespeichert ist.

Im Folgenden werden mit Verweis auf die Figuren Ausführungsbeispiele der Erfindung beschrieben.

Kurze Beschreibung der Figuren

Fig. 1 zeigt ein Füllstandmessgerät gemäß einem Ausführungsbeispiel der Erfindung.

Fig. 2 zeigt ein Flussdiagramm eines Verfahrens gemäß einem Ausführungsbeispiel der Erfindung.

Fig. 3 zeigt ein Flussdiagramm eines Verfahrens gemäß einem weiteren Ausführungsbeispiel der Erfindung.

Fig. 4 zeigt ein Flussdiagramm eines Verfahrens gemäß einem weiteren Ausführungsbeispiel der Erfindung.

Fig. 5 zeigt einen Auszug aus einer weiter unten genannten Schrift von Welch und Bishop.

Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

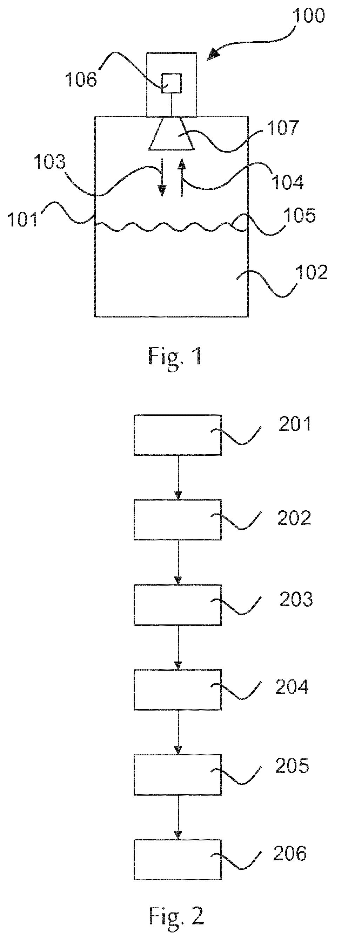

Fig. 1 zeigt ein Füllstandmessgerät gemäß einem Ausführungsbeispiel der Erfindung. Bei dem Füllstandmessgerät 100 handelt es sich beispielsweise um ein Füllstandradar oder ein anderweitiges Messgerät, welches die Position einer Füllgutoberfläche 105 eines Füllguts 102, das sich im Behälter 101 befindet, bestimmen kann. Das Messgerät 100 weist eine Sensoreinrichtung 107, beispielsweise in Form einer Sende-/Empfangsantenne auf. Die Sende-/Empfangsantenne 107 sendet ein Messsignal 103 in Richtung der Füllgutoberfläche 105 aus. Das Messsignal wird dann zumindest teilweise an der Oberfläche des Füllguts 105 reflektiert und in Richtung der Sende-/Empfangsantenne 107 zurückgeworfen (vgl. Pfeil 104).

Die Sende-/Empfangsantenne nimmt dann das reflektierte Messsignal auf und gibt es an die Elektronik 106 des Füllstandmessgeräts 100 weiter. Die Elektronik 106 weist eine Steuereinheit auf und wird der Einfachheit halber im Folgenden in ihrer Gesamtheit als "Steuereinheit" bezeichnet.

Das Füllstandmessgerät ist in der Lage, die Messwerte, die das Füllstandmessgerät in zeitlich aufeinanderfolgenden Messungen erhalten hat, zu mitteln, um das Rauschen zu unterdrücken. Hierbei soll jedoch der Offset bzw. Versatz zwischen der realen Position der Füllgutoberfläche und dem letztendlich ausgegebenen Messwert bzw. dem ausgegebenen Füllstand reduziert werden.

Hierfür bedient sich die Steuereinheit der Kenntnis der Rahmenbedingungen, die bei Füllstandmessgeräten vorhanden sind.

Beispielsweise soll der Füllstand des Mediums in einem Behälter erfasst werden. Es können die folgende Situationen auftreten:

- Der Behälter wird mit konstanter Geschwindigkeit entleert.

- Der Behälter wird mit konstanter Geschwindigkeit befüllt.

- Die Position der Füllgutoberfläche ändert sich mit konstanter Beschleunigung bei einer Entleerung.

- Die Position der Füllgutoberfläche ändert sich mit konstanter Beschleunigung bei einer Befüllung.

- Der Behälter wird weder befüllt noch entleert, d. h. der Füllstand ändert sich nicht.

Die möglichen Situationen, die im Tank auftreten können, können nun mittels eines mathematischen Modells beschrieben werden. Hierfür eignen sich insbesondere zeitdiskrete Modelle, die vorteilhaft zur Modellierung von Systemen auf Mikrocontrollern verwendet werden können und so angepasst sind, dass der Zustand des Modells sich mit einem entsprechenden Zustandschätzers (z.B. einem Kalman-Filter) ermitteln lässt.

Kalman-Filter schätzen den Zustand eines technischen Systems. Neben dieser reinen Zustandsschätzung wird darüber hinaus eine Schätzung der Sicherheit der Zustandsschätzung mitgeschätzt (Selbsteinschätzung). In diesem Zusammenhang sei auf die Druckschrift von Greg Welch und Gary Bishop mit dem Titel "An Introduction to the Kalman-Filter" vom 24. Juli 2006 verwiesen. Im weiteren Kontext repräsentiert ein Kalman-Filter die Kombination aus mathematischem Modell eines technischen Systems und Zustandschätzer selbst. Das Kalman-Filter beinhaltet folglich ein mathematisches Modell zur Beschreibung von z.B. der oben genannten Situation und ein Mechanismus zum Schätzen des Zustandes des Modells. Zudem kann eine geschätzte Vorhersage getroffen werden, wie sich der Zustand des Systems in einem nächsten Schritt verändern wird.

Ein einzelnes Kalman-Filter, welches den Messwert bzw. den Füllstand schätzt, kann im Regelfall nicht alle oben beschriebenen Situationen im Behälter mit hinreichender Genauigkeit abbilden. Verwendet man jedoch mehrere individuelle Kalman-Filter, die jeweils eine Situation beschreiben, so können diese abhängig von ihrer aktuellen Güte ("Wie gut passt des entsprechende Modell zum aktuellen Messergebnis?") miteinander gemischt werden.

Somit kann die Genauigkeit des ermittelten Füllstands dadurch verbessert werden, dass in einem ersten Schritt die bei der Messung möglichen Situationen (Befüllung/Entleerung/Ruhe) durch verschiedene, untereinander unabhängige mathematischen Modelle über Kalman-Filter beschrieben werden, und dass in einem weiteren Schritt die verschiedenen Kalman-Filter abhängig von der aktuell vorliegenden Situation (Befüllung/Entleerung/Ruhe) gewichtet gemischt oder fest umgeschaltet werden, so dass zur aktuell vorliegenden Situation (Befüllung/Entleerung/Ruhe) immer dasjenige Kalman-Filter das größte Gewicht erhält, welches am besten mit seinem zugrunde liegenden Systemmodell zur aktuellen Situation passt.

Die in der Schrift von Welch und Bishop beschriebenen Formeln lassen sich zusammengefasst wie in der Fig. 5 abgebildet darstellen.

Für die technische Realisierung des beschriebenen Verfahrens werden zunächst die verschiedenen mathematischen Modelle benötigt, welche die denkbaren Situationen im Behälter beschreiben. Zum besseren Verständnis wird davon ausgegangen, dass im Behälter der Füllstand linear verändert wird oder an einer bestimmten Position verharrt.

Hierfür benötigt man folglich zwei verschiedene Modelle. Ein Modell, welches die Situation eines bewegten Füllstands abbildet, und ein Modell, welches die Situation einer ruhenden Füllgutoberfläche widerspiegelt. Im Folgenden sind Beispiele für geeignete mathematische Modelle angegeben, welche von der Steuereinheit zur Berechnung des Füllstands verwendet werden können.

Ausgehend von der Schrift von Welch und Bishop können folgende Modelle entwickelt werden.

1. Beispielhaftes Modell, welches eine bewegte Füllgutoberfläche repräsentiert:

$$\hat{x}_k \; = \begin{bmatrix} \hat{p}_k \\ \hat{v}_k \end{bmatrix} \qquad A = \begin{bmatrix} 1 & \Delta t \\ 0 & 1 \end{bmatrix}$$

k: Laufindex (Schritt/Messung k)

$\hat{p}_k$ : berechnete Position der Füllgutoberfläche zum Zeitpunkt k

$\hat{v}_k$ : berechnete Geschwindigkeit der Füllgutoberfläche zum Zeitpunkt k

A: Transitionsmatrix, die beschreibt, wie der Zustand des Systems zum Zeitpunkt k-1 in den Zustand k zu überführen ist

$\Delta$t: Zeit zwischen den Messungen k und k-1

$$z_k = \begin{bmatrix} \tilde{p}_k \\ 0 \end{bmatrix} \qquad H = \begin{bmatrix} 1 & 0 \\ 0 & 0 \end{bmatrix}$$

$z_k$ : Vektor, der alle gemessenen Größen zusammenfasst

$\tilde{p}_k$: Messung der Position der Füllgutoberfläche zum Zeitpunkt k

H: Matrix, die den Zusammenhang zwischen Messung $z_k$ und Systemzustand $x_k$ aufzeigt ($z_k = H * x_k$)

$$Q = \begin{bmatrix} 0{,}001 & 0 \\ 0 & 1 \end{bmatrix} \qquad R = \begin{bmatrix} 1 & 0 \\ 0 & 1 \end{bmatrix}$$

Q: Beispiel, wie das Systemrauschen modelliert werden kann

R: Beispiel, wie das Messrauschen modelliert werden kann

2. Modell, welches eine ruhende Füllgutoberfläche repräsentiert:

$$\hat{x}_k = \begin{bmatrix} \hat{p}_k \end{bmatrix} \qquad A = \begin{bmatrix} 1 \end{bmatrix}$$

$$z_k = \begin{bmatrix} \tilde{p}_k \end{bmatrix} \qquad H = \begin{bmatrix} 1 \end{bmatrix}$$

$$Q = \begin{bmatrix} 0{,}00001 \end{bmatrix} \qquad R = \begin{bmatrix} 1 \end{bmatrix}$$

In beiden Beispielen wird davon ausgegangen, dass die Matrizen zur Modellierung des Systems konstant sind. Daher wird im Beispiel auf den Laufindex k verzichtet.

Beide Modelle schätzen den Füllstand in unterschiedlichen Situationen unterschiedlich gut. Sie sind aber nur als Beispiel zu sehen. Insbesondere die absoluten Zahlenwerte in den Matrizen Q und R sind Parameter, die es erlauben, das jeweilige Filter optimal auf die aktuelle Situation anzupassen. Auch hier besteht die Möglichkeit, die einzelnen Modelle mit unterschiedlichen Filtereigenschaften mehrfach zu implementieren und in dem darauffolgenden Schritt zu mischen oder zwischen einzelnen Modellen fix umzuschalten.

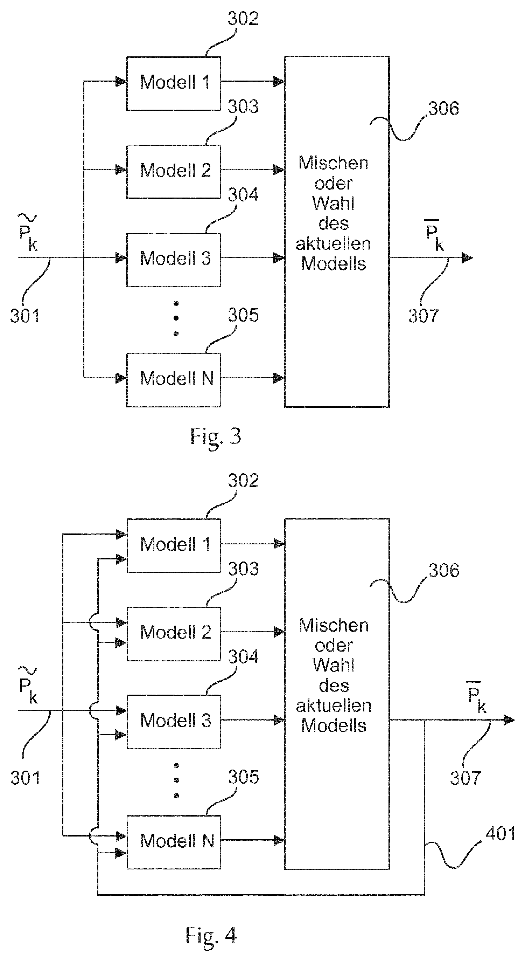

Alle einzelnen Modelle aus dem obigen Beispiel können dann in einem zweiten Schritt gezielt zusammengeführt werden. Eine Struktur hierfür ist in der Fig. 3 dargestellt.

Es wird deutlich, dass jedes Modell, welches eine Situation (Befüllung/Entleerung/Ruhe) beschreibt, mit der Information über den aktuellen Messwert $\tilde{p}_k$ 301 versorgt wird. Innerhalb der Funktionsblöcke 302, 303, 304, 305, die mit der Bezeichnung Modell 1 bis Modell N versehen sind, wird mittels eines von dem Füllstandmessgerät erfassten Messwerts das Systemmodell, wie es weiter oben in dem Diagramm abgebildet ist, aktualisiert. Der Messwert selbst ist in diesem Beispiel nur die Position der Füllgutoberfläche. Bei einem Sensor, der neben dem reinen Distanzwert auch noch die Geschwindigkeit, mit welcher sich die Füllgutoberfläche bewegt, ermittelt (z. B. bei Radar-Sensoren, die die Dopplerverschiebung auswerten), kann auch dieser weitere Messwert für die Aktualisierung der Modelle herangezogen werden.

Die von den N (N ist eine ganze Zahl) Modellen ausgegebenen geschätzten Füllstände bzw. geschätzten Messwerte werden dann in Schritt 306 gewichtet und gemischt oder es wird das aktuell gültige Modell (das Modell, welches das beste Schätzergebnis liefert) ausgewählt. In Schritt 307 wird dann der von dem/den Modellen berechnete Füllstand bzw. Messwert $\bar{p}_k$ ausgegeben.

Fig. 4 zeigt eine vorteilhafte Ausführungsform, bei der sich die einzelnen Modelle aktualisieren lassen. Ausgehend von Fig. 3 findet hier noch eine Rückkopplung 401 des berechneten Wertes 307 zu den ursprünglichen N Modellen 302 bis 305 statt. Damit wird erreicht, dass insbesondere die Modelle, die nicht zur aktuellen Situation passen, der Position der Füllgutoberfläche weiterhin folgen können. Dies gewährleistet die Stabilität der einzelnen Modelle. Dies bedeutet, dass die Schätzung der Position der Füllgutoberfläche durch die einzelnen Modelle nicht von der realen

Position der Füllgutoberfläche divergiert, da die einzelnen Modelle durch die Aktualisierung, welche auch den berechneten Wert 307 verwendet, auf eine geeignete "Startposition" gebracht werden können.

Der Funktionsblock 306 kann als "Mischen oder Wahl des aktuellen Modells" bezeichnet werden und mischt die einzelnen Zustände der verschiedenen Modelle oder wählt ein einzelnes Modell aus und gibt dessen Messwert auf den Ausgang der Steuereinheit.

Die Wahl des richtigen Modells bzw. der Faktor, mit welchem das jeweilige Modell gewichtet werden soll, ergibt sich beispielsweise aus der Differenz zwischen der Vorhersage des Modells (also dem von dem entsprechenden Modell berechneten Füllstand zu einem bestimmten Zeitpunkt) und dem Füllstand zu diesem Zeitpunkt, den das Füllstandmessgerät durch Messung bestimmt hat.

Für das zweite Modell, welches eine ruhende Füllgutoberfläche beschreibt, entspricht die Vorhersage des Füllstands einer weiteren Messung der Schätzung des Füllstands der vorherigen Messung, da das Modell davon ausgeht, dass sich die Füllgutoberfläche nicht bewegt hat.

Das erste Modell geht davon aus, dass sich die Füllgutoberfläche mit der Geschwindigkeit $\hat{v}_k$ bewegt und erwartet folglich den neuen Messwert des Sensors an der Position, die sich aus der alten Position der Füllgutoberfläche und der zwischen zwei Messungen zurückgelegten Strecke ($\hat{v}_k * \Delta t$) ergibt.

In einem einfachen Verfahren kann nun dasjenige Modell als aktuell bestes Modell angesehen werden, bei welchem die Vorhersage am nächsten zum aktuellen Messwert $\tilde{p}_k$ ist.

Ein einfaches Verfahren zum Mischen mehrerer Modelle sieht vor, entsprechend der Abweichung zwischen Vorhersage und Messwert $\tilde{p}_k$ ein Gewichtungsfaktor zu berechnen. Dieser Gewichtungsfaktor entspricht in diesem Beispiel der Güte des Modells. Die Güte gibt daher an, wie geeignet das jeweilige Modell den Messwert repräsentieren kann. Mit anderen Worten ist die Güte ein Maß, wie gut das Modell die aktuelle Situation beschreibt. Die Berechnungsvorschrift für die Ermittlung der Güte sei hier nur als Beispiel aufzufassen. Es sind weitere Verfahren denkbar. Als Beispiel sind zwei Modelle gegeben (Modell A, Modell B). Der aktuelle Messwert liege bei $\tilde{p}_k$ = 100 mm. Modell A schätze den Messwert auf $\hat{p}_{\text{Modell A,k}}$ = 101 mm, Modell B schätze den Messwert auf $\hat{p}_{\text{Modell B,k}}$ = 105 mm. Eine Berechnungsvorschrift für die Güte könnte für das Beispiel folgende Form aufweisen.

$$\text{Güte für A}$$

$$= 1 - (|\,\hat{p}_{\text{Modell A,k}} - \tilde{p}_k\,|) / ((|\,\hat{p}_{\text{Modell A,k}} - \tilde{p}_k\,|) + (|\,\hat{p}_{\text{Modell B,k}} - \tilde{p}_k\,|))$$

$$= 1 - (|101\text{ mm} - 100\text{ mm}|) / ((|101\text{mm} - 100\text{mm}|) + (|105\text{ mm} - 100\text{ mm}|))$$

$$= 1 - 1/(1+5)$$

$$= 5/6$$

$$\text{Güte für B}$$

$$= 1 - (|\,\hat{p}_{\text{Modell B,k}} - \tilde{p}_k\,|) / ((|\,\hat{p}_{\text{Modell A,k}} - \tilde{p}_k\,|) + (|\,\hat{p}_{\text{Modell B,k}} - \tilde{p}_k\,|))$$

$$= 1 - (|105\text{ mm} - 100\text{ mm}|) / ((|101\text{mm} - 100\text{mm}|) + (|105\text{ mm} - 100\text{ mm}|))$$

$$= 1 - 5/(1+5)$$

$$= 1/6$$

Der gemischte Messwert $\bar{p}_k$ könnte sich dann so *zusammensetzen:* $\bar{p}_k$ = Güte für A * $\hat{p}_{\text{Modell A,k}}$ + Güte für B * $\hat{p}_{\text{Modell B,k}}$

Ein Mischen ist natürlich nicht erforderlich und im Beispiel arithmetisch nicht möglich, wenn gilt $\hat{p}_{\text{Modell A,k}}$ = $\hat{p}_{\text{Modell B,k}}$ = $\tilde{p}_k$.

Ein komplexeres Verfahren zum Mischen der einzelnen Modelle wird als "Interacting Multiple Model (IMM)" bezeichnet. Hierbei handelt es sich um eine vorteilhafte Art, die verschiedenen Modelle zusammenzuführen. Bei IMM wird ebenfalls eine Güte der einzelnen Modelle mittels einer Likelihood-Funktion berechnet.

Fig. 2 zeigt ein Flussdiagramm eines Verfahrens gemäß einem Ausführungsbeispiel der Erfindung. In Schritt 201 erfasst das Füllstandmessgerät einen Messwert, der beispielsweise mit der Position der Füllgutoberfläche korrespondiert. Dieser Messwert wird dann den unterschiedlichen mathematischen Modellen übergeben und verrechnet. Jedes der Modelle führt eine Zustandsschätzung, indem jedes der Modelle aktualisiert wird. Verwenden die Modelle Kalman-Filter werden die Kalman-Filter aktualisiert (Schritt 202).

In Schritt 203 wird die Güte jedes der Modelle berechnet, beispielsweise indem hierfür ein neuer, zu einem späteren Zeitpunkt erfasster Messwert, der mit einem Füllstand des Füllmediums zu dem späteren Zeitpunkt korrespondiert, herangezogen wird. In diesem Zusammenhang sei darauf hingewiesen, dass im Rahmen der Anmeldung "Messwert, der mit einem Füllstand korrespondiert" mit "Füllstand" gleichgesetzt werden kann.

Zusätzlich zum neuen Messwert können auch andere Größen für die Güteberechnung einfließen. Beispielsweise können Matrizen des Zustandsschätzers berücksichtigt werden. Ein Vergleich des neuen Messwerts mit den Zuständen des Modells (also dem von jedem Modell berechneten Füllstand) ist das einfachste Beispiel. Die Güte ist ein Wert, der ausdrückt, wie gut das mathematische Modell die aktuelle Situation (Befüllung/Entleerung/Ruhe) und die Position des Füllguts erfasst.

In Schritt 204 werden die Modelle dann gemischt oder ausgewählt, je nach deren Güte. In Schritt 205 wird dann aus dem sich daraus ergebenden gemischten Modell bzw. dem ausgewählten Modell, das die höchste Güte aufweist, der Füllstand berechnet und in Schritt 206 wird dieser Füllstand beispielsweise mittels HART oder auf einem Display ausgegeben.

Im Folgenden sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

**Patentansprüche**

1. Füllstandmessgerät (100) zur Ermittlung eines Füllstands eines Füllguts (102), aufweisend:

   eine Sensoreinrichtung (107) zum Erfassen eines Messwerts, der mit dem Füllstand des Füllguts zu einem ersten Zeitpunkt korrespondiert;
   eine Steuereinheit (106), welche ausgeführt ist, für den erfassten Messwert die folgenden Schritte auszuführen:

   Einfüttern des erfassten Messwertes in unterschiedliche und voneinander unabhängige mathematische Modelle und Berechnen eines prognostizierten, zukünftigen Füllstands zu einem zweiten, späteren Zeitpunkt für jedes Modell unter Verwendung eines Kalman-Filters, wobei eines der Modelle eine Entleerung beschreibt und ein anderes der Modelle beschreibt, dass sich der Füllstand nicht ändert;
   Berechnen der Güte jedes einzelnen Modells unter Berücksichtigung einer Differenz zwischen dem von dem Füllstandmessgerät gemessenen Füllstand des Füllguts zu dem zweiten, späteren Zeitpunkt und den von den aktualisierten Modellen berechneten Füllständen;
   Gewichten und Mischen der Modelle oder Auswählen eines der Modelle in Abhängigkeit von ihrer jeweiligen Güte;
   Berechnen eines Füllstands des Füllguts zu dem zweiten, späteren Zeitpunkt durch die gewichteten und gemischten Modelle oder durch das ausgewählte Modell;
   Ausgabe des durch die gewichteten und gemischten Modelle oder durch das ausgewählte Modell berechneten Füllstands.

2. Füllstandmessgerät (100) nach Anspruch 1,
   wobei die Steuereinheit (106) ausgeführt ist zum Beschreiben von möglichen Zuständen des Füllguts (102) zu einem dritten Zeitpunkt, der zeitlich hinter dem zweiten Zeitpunkt liegt, mittels der mehreren unterschiedlichen und voneinander unabhängigen mathematischen Modelle unter Verwendung des berechneten Füllstands zum zweiten Zeitpunkt.

3. Füllstandmessgerät (100) nach einem der vorhergehenden Ansprüche,
   wobei die Modelle die Geometrie des Behälters (101), in dem sich das Füllgut (102) befindet, berücksichtigen.

4. Verfahren zum Ermitteln eines Füllstands eines Füllguts (102), aufweisend die Schritte:

   Erfassen eines Messwerts, der mit dem Füllstand des Füllguts zu einem ersten Zeitpunkt korrespondiert;

Einfüttern des erfassten Messwertes in unterschiedliche und voneinander unabhängige mathematischer Modelle und Berechnen eines prognostizierten, zukünftigen Füllstands zu einem zweiten, späteren Zeitpunkt für jedes Modell unter Verwendung eines Kalman-Filters, wobei eines der Modelle eine Entleerung beschreibt und ein anderes der Modelle beschreibt, dass sich der Füllstand nicht ändert;

Berechnen der Güte jedes einzelnen Modells unter Berücksichtigung einer Differenz zwischen dem von dem Füllstandmessgerät gemessenen Füllstand des Füllguts zu dem zweiten, späteren Zeitpunkt und den von den aktualisierten Modellen berechneten Füllständen;

Gewichten und Mischen der Modelle oder Auswählen eines der Modelle in Abhängigkeit von ihrer jeweiligen Güte;

Berechnen eines Füllstands des Füllguts zu dem zweiten, späteren Zeitpunkt durch die gewichteten und gemischten Modelle oder durch das ausgewählte Modell;

Ausgabe des durch die gewichteten und gemischten Modelle oder durch das ausgewählte Modell berechneten Füllstands.

**5.** Programmelement, das, wenn es auf einer Steuereinheit (106) eines Füllstandmessgeräts (100) ausgeführt wird, die Steuereinheit anleitet, die folgenden Schritte durchzuführen:

Einfüttern des erfassten Messwertes in unterschiedliche und voneinander unabhängige mathematischer Modelle und Berechnen eines prognostizierten, zukünftigen Füllstands zu einem zweiten, späteren Zeitpunkt für jedes Modell unter Verwendung eines Kalman-Filters, wobei eines der Modelle eine Entleerung beschreibt und ein anderes der Modelle beschreibt, dass sich der Füllstand nicht ändert;

Berechnen der Güte jedes einzelnen Modells unter Berücksichtigung einer Differenz zwischen dem von dem Füllstandmessgerät gemessenen Füllstand des Füllguts zu dem zweiten, späteren Zeitpunkt und den von den aktualisierten Modellen berechneten Füllständen;

Gewichten und Mischen der Modelle oder Auswählen eines der Modelle in Abhängigkeit von ihrer jeweiligen Güte;

Berechnen eines Füllstands des Füllguts zu dem zweiten, späteren Zeitpunkt durch die gewichteten und gemischten Modelle oder durch das ausgewählte Modell;

Ausgabe des durch die gewichteten und gemischten Modelle oder durch das ausgewählte Modell berechneten Füllstands.

**6.** Computerlesbares Medium, auf dem ein Programmelement nach Anspruch 5 gespeichert ist.


**Claims**

**1.** Fill level measuring device (100) for determining a fill level of a bulk material (102), comprising:

a sensor device (107) for detecting a measured value that corresponds to the fill level of the bulk material at a first point in time;
a control unit (106) which is configured for performing the following steps for the detected measured value:

Including the measured value into different and mutually independent mathematical models using and calculating a predicted, future fill level at a second, later point in time for each model a Kalman filter, wherein one of the models describes an emptying and another one of the models describes that the fill level does not change;
Calculating the quality of each individual model taking into account a difference between the fill level of the bulk material measured by the fill level measuring device at the second, later point in time and the fill levels calculated by the updated models;
Weighting and combining the models or selecting one of the models in dependence on their respective quality;
Calculating a fill level of the bulk material at the second, later point in time by the weighted and combined models or by the selected model;
Output of the fill level calculated by the weighted and combined models or by the selected model.

**2.** The fill level measuring device (100) according to claim 1, wherein the control unit (106) is configured for describing possible states of the bulk material (102) at a third point in time, which is later than the second point in time, by means of the plurality of different and mutually independent mathematical models using the calculated fill level at the second point in time.

3. The fill level measuring device (100) according to one of the preceding claims, wherein the models take into account the geometry of the container (101) in which the bulk material (102) is located.

4. Method for determining a fill level of a bulk material (102), comprising the steps:

Detecting a measured value that corresponds to the fill level of the bulk material at a first point in time;
Including the measured value into different and mutually independent mathematical models and calculating a predicted, future fill level at a second, later point in time for each model using a Kalman filter, wherein one of the models describes an emptying and another one of the models describes that the fill level does not change;
Calculating the quality of each individual model taking into account a difference between the fill level of the bulk material measured by the fill level measuring device at the second, later point in time and the fill levels calculated by the updated models; Weighting and combining the models or selecting one of the models in dependence on their respective quality;
Calculating a fill level of the bulk material at the second, later point in time by the weighted and combined models or by the selected model;
Output of the fill level calculated by the weighted and combined models or by the selected model.

5. A program element, which, when executed on a control unit (106) of a fill level measuring device (100), instructs the control unit to perform the following steps:

Including the measured value into different and mutually independent mathematical models and calculating a predicted, future fill level at a second, later point in time for each model using a Kalman filter, wherein one of the models describes an emptying and another one of the models describes that the fill level does not change;
Calculating the quality of each individual model taking into account a difference between the fill level of the bulk material measured by the fill level measuring device at the second, later point in time and the fill levels calculated by the updated models;
Weighting and combining the models or selecting one of the models in dependence on their respective quality;
Calculating a fill level of the bulk material at the second, later point in time by the weighted and combined models or by the selected model;
Output of the fill level calculated by the weighted and combined models or by the selected model.

6. A computer-readable medium on which a program element according to claim 5 is stored.

**Revendications**

1. Appareil de mesure de niveau de remplissage (100) pour déterminer un niveau de remplissage d'un produit de remplissage (102), comprenant :

un système de capteur (107) pour saisir une valeur de mesure, qui correspond au niveau de remplissage du produit de remplissage en un premier temps,
une unité de commande (106) qui est exécutée pour effectuer les étapes suivantes pour la valeur de mesure saisie :

introduction de la valeur de mesure saisie dans des modèles mathématiques différents et indépendants les uns des autres et calcul d'un niveau de remplissage pronostiqué, futur en un deuxième temps ultérieur pour chaque modèle en utilisant un filtre Kalman, un des modèles décrivant une vidange et un autre modèle décrivant que le niveau de remplissage ne varie pas,
estimation de la qualité de chaque modèle individuel en tenant compte d'une différence entre le niveau de remplissage du produit de remplissage mesuré par l'appareil de mesure de niveau de remplissage au deuxième temps ultérieur et les niveaux de remplissage calculés par les modèles actualisés,
pondération et combinaison des modèles ou sélection d'un des modèles en fonction de sa qualité respective,
calcul d'un niveau de remplissage du produit de remplissage au deuxième temps ultérieur par les modèles pondérés et combinés ou par le modèle sélectionné,
édition du niveau de remplissage calculé par les modèles pondérés et combinés ou par le modèle sélectionné.

**2.** Appareil de mesure de niveau de remplissage (100) selon la revendication 1, l'unité de commande (106) étant exécutée pour décrire des niveaux possibles du produit de remplissage (102) en un troisième temps qui se situe dans le temps après le deuxième temps, au moyen de plusieurs modèles mathématiques différents et indépendants les uns des autres en utilisant le niveau de remplissage calculé au deuxième temps.

**3.** Appareil de mesure de niveau de remplissage (100) selon l'une quelconque des revendications précédentes, les modèles tenant compte de la géométrie du conteneur (101) dans lequel se trouve le produit de remplissage (102).

**4.** Procédé destiné à déterminer un niveau de remplissage d'un produit de remplissage (102), comprenant les étapes suivantes :

saisie d'une valeur de mesure qui correspond au niveau de remplissage du produit de remplissage en un premier temps,
introduction de la valeur de mesure saisie dans des modèles mathématiques différents et indépendants les uns des autres et calcul d'un niveau de remplissage pronostiqué, futur en un deuxième temps ultérieur pour chaque modèle en utilisant un filtre Kalman, un des modèles décrivant une vidange et un autre modèle décrivant que le niveau de remplissage ne varie pas,
estimation de la qualité de chaque modèle individuel en tenant compte d'une différence entre le niveau de remplissage du produit de remplissage mesuré par l'appareil de mesure de niveau de remplissage au deuxième temps ultérieur et les niveaux de remplissage calculés par les modèles actualisés,
pondération et combinaison des modèles ou sélection d'un des modèles en fonction de sa qualité respective,
calcul d'un niveau de remplissage du produit de remplissage au deuxième temps ultérieur par les modèles pondérés et combinés ou par le modèle sélectionné,
édition du niveau de remplissage calculé par les modèles pondérés et combinés ou par le modèle sélectionné.

**5.** Elément de programme que, lorsqu'il est exécuté sur une unité de commande (106) d'un appareil de mesure de niveau de remplissage (100), l'unité de commande ordonne d'exécuter les étapes suivantes :

introduction de la valeur de mesure saisie dans des modèles mathématiques différents et indépendants les uns des autres et calcul d'un niveau de remplissage pronostiqué, futur en un deuxième temps ultérieur pour chaque modèle en utilisant un filtre Kalman, un des modèles décrivant une vidange et un autre modèle décrivant que le niveau de remplissage ne varie pas, estimation de la qualité de chaque modèle individuel en tenant compte d'une différence entre le niveau de remplissage du produit de remplissage mesuré par l'appareil de mesure de niveau de remplissage au deuxième temps ultérieur et les niveaux de remplissage calculés par les modèles actualisés,
pondération et combinaison des modèles ou sélection d'un des modèles en fonction de sa qualité respective,
calcul d'un niveau de remplissage du produit de remplissage au deuxième temps ultérieur par les modèles pondérés et combinés ou par le modèle sélectionné,
édition du niveau de remplissage calculé par les modèles pondérés et combinés ou par le modèle sélectionné.

**6.** Moyen lisible par ordinateur sur lequel un élément de programme selon la revendication 5 est mémorisé.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9932857 A1